# EUROPEAN PATENT APPLICATION

(11) **EP 4 582 964 A1**
(43) Date of publication of application: **09.07.2025**
(21) Application number: 23870100.7
(22) Date of filing: 28.08.2023
(51) Int. Cl.: G06F 13/38

(54) **ELECTRONIC DEVICE, PROCESSOR, AND DATA TRANSMISSION METHOD AND APPARATUS**

(30) Priority: 26.09.2022 CN 202211174451
(71) Applicant: Huawei Technologies Co., Ltd., Shenzhen, Guangdong 518129 (CN)
(72) Inventor: NI, Binbin, Shenzhen, Guangdong 518129 (CN); GONG, Binyang, Shenzhen, Guangdong 518129 (CN); SONG, Dongkuang, Shenzhen, Guangdong 518129 (CN)
(74) Representative: Goddar, Heinz J.
(86) International application number: PCT/CN2023/115348
(87) International publication number: WO 2024/066857

(57) **Abstract**

An electronic device, a processor, and a data transmission method and apparatus are provided. In this application, the electronic device includes a processor and a BMC. A processor core in the processor generates first IPMI data, and sends the first PIMI data to a controller. The controller sends the first IPMI data to the BMC through a PCIE interface or an IPMB interface. The BMC manages the processor based on the first IPMI data. After generating second IPMI data, the BMC sends the second IPMI data to the controller through the PCIE interface or the IPMB interface. The controller sends the received second IPMI data to the processor core. The processor core adjusts a status of the processor based on the second IPMI data. A high transmission rate is implemented through the PCIE interface or the IPMB interface disposed between the processor and the BMC, to implement efficient transmission of IPMI data between the processor and the BMC.

## Description

### CROSS-REFERENCE TO RELATED APPLICATIONS

This application claims priority to Chinese Patent Application No. 202211174451.8, filed with the China National Intellectual Property Administration on September 26, 2022 and entitled "ELECTRONIC DEVICE, PROCESSOR, DATA TRANSMISSION METHOD AND APPARATUS", which is incorporated herein by reference in its entirety.

### TECHNICAL FIELD

This application relates to the field of communication technologies, and in particular, to an electronic device, a processor, and a data transmission method and apparatus.

### BACKGROUND

Platform management is to monitor and control a hardware device. For example, platform management may be performed on a server, to monitor information such as a temperature, a voltage, a fan, and a power supply of a hardware device in the server and correspondingly adjust the server based on the monitored information, thereby ensuring that the server is in a normal working state.

The foregoing functions of monitoring and controlling the hardware device may be integrated into a baseboard management controller (Baseboard Manager Controller, BMC). The BMC is a controller that is deployed on a server and that has independent power supply and an independent I/O interface, and may be configured to monitor a working status such as a temperature and a voltage of each hardware device (for example, a central processing unit (Central Processing Unit, CPU), a memory, a hard disk, a fan, and a subrack) in the server. For example, during temperature monitoring, a fan speed may be adjusted in real time based on a monitoring result at each temperature collection point, to ensure that the server is not overheated. When monitoring the working status of each hardware device in the server, the BMC needs to obtain status data from a processor of the server. When adjusting the working status of the hardware device in the server, the BMC needs to send data to the processor of the server. Therefore, how to perform data transmission between the BMC and the processor becomes a problem to be urgently resolved.

### SUMMARY

This application provides an electronic device, a processor, and a data transmission method and apparatus, to efficiently transmit data between a BMC and a processor.

According to a first aspect, an embodiment of this application provides an electronic device. The electronic device includes a processor and a BMC. The processor and the BMC may communicate through a PCIE interface or an IPMB interface. The processor further includes a processor core and at least one controller.

In a running process, the processor core generates first IPMI data that represents a status of the processor, and the processor core sends the first PIMI data to the at least one controller. The at least one controller sends the received first IPMI data to the BMC through the PCIE interface or the IPMB interface. After receiving the first IPMI data, the BMC manages the processor based on the received first IPMI data. In addition, after generating second IPMI data used for managing the processor, the BMC sends the second IPMI data to the at least one controller through the PCIE interface or the IPMB interface. The at least one controller sends, to the processor core, the second IPMI data received through the PCIE interface or the IPMB interface. The processor core adjusts the status of the processor based on the second IPMI data.

By using the foregoing electronic device, after generating the first IPMI data, the processor core in the processor may transmit the first IPMI data to the BMC by using the at least one controller and the PCIE interface or the IPMB interface disposed between the processor and the BMC. After generating the second IPMI data, the BMC may transmit, through the PCIE interface or the IPMB interface, the second IPMI data to the at least one controller, and send the second IPMI data to the processor core. Therefore, the first IPMI data is transmitted from the processor to the BMC, and the second IPMI data is transmitted from the BMC to the processor. In addition, because a high transmission rate is implemented through the PCIE interface or the IPMB interface disposed between the processor and the BMC, efficient transmission of the first IPMI data and the second IPMI data between the processor and the BMC can be implemented.

In a possible implementation, when the processor communicates with the BMC through the PCIE interface, a PCIE control unit is disposed in the processor. When the processor core sends the first IPMI data to the BMC, the PCIE control unit may be configured to: receive the first IPMI data sent by the controller, forward the first IPMI data to the PCIE interface, and send the first IPMI data to the BMC through the PCIE interface.

By using the foregoing electronic device, because the PCIE control unit is disposed in the processor, after the controller receives the first IPMI data generated by the processor core, the controller may transmit the first IPMI data to the PCIE control unit. The PCIE control unit is a processing node, in the processor, for a PCIE link between the processor and the BMC, and can transfer the first IPMI data to the PCIE interface, to implement PCIE interface-based data transmission.

In a possible implementation, when the processor communicates with the BMC through the PCIE interface, the PCIE control unit disposed in the processor may be further configured to send, to the controller through the PCIE interface, the second IPMI data generated by the BMC; and the PCIE control unit receives, through the PCIE interface, the second IPMI data sent by the BMC, and sends the second IPMI data to the controller.

By using the foregoing electronic device, because the PCIE control unit is disposed in the processor, the PCIE control unit is the processing node, in the processor, for the PCIE link between the processor and the BMC. After the BMC generates the second IPMI data, the PCIE control unit may obtain the second IPMI data from the BMC through the PCIE interface. Therefore, based on the PCIE control unit, the second IPMI data can be obtained from the PCIE interface, and transmitted to the processor core by using the controller, to complete efficient transmission of the second PIMI data from the BMC to the processor.

In a possible implementation, when the PCIE control unit sends the first IPMI data to the BMC through the PCIE interface, the PCIE control unit may store, through the PCIE interface, the first IPMI data into storage space that is in the BMC and that corresponds to the PCIE interface. When obtaining the first IPMI data, the BMC may directly read the first IPMI data from the storage space corresponding to the PCIE interface.

By using the foregoing electronic device, the storage space corresponding to the PCIE interface is preset in the BMC. When sending the first IPMI data to the BMC through the PCIE interface, the PCIE control unit may send the first IPMI data to the BMC in a manner of writing the first IPMI data into the storage space through the PCIE interface. Correspondingly, the BMC may read the first IPMI data from the storage space, to provide a PCIE interface-based manner of transmitting the first IPMI data from the PCIE control unit to the BMC.

In a possible implementation, when the PCIE control unit receives, through the PCIE interface, the second IPMI data sent by the BMC, the BMC stores the generated second IPMI data into the storage space corresponding to the PCIE interface. The PCIE control unit obtains the second IPMI data from the storage space in the BMC through the PCIE interface.

By using the foregoing electronic device, the storage space corresponding to the PCIE interface is preset in the BMC. After generating the second IPMI data, the BMC stores the second IPMI data into the storage space corresponding to the PCIE interface. Correspondingly, the PCIE control unit may obtain the second IPMI data from the storage space in the BMC through the PCIE interface, to provide a PCIE interface-based manner of transmitting the second IPMI data from the BMC to the PCIE control unit.

In a possible implementation, the processor core initializes the at least one controller in a startup process of the electronic device; and in a process of initializing the controller, configures address information of the storage space corresponding to the PCIE interface in the BMC. The address information indicates a storage location, in the BMC, of the first IPMI data or the second IPMI data transmitted through the PCIE interface.

By using the foregoing electronic device, in the process of initializing the controller, the processor core configures the address information of the storage space corresponding to the PCIE interface in the BMC. The storage space corresponding to the address information may be used to store the first IPMI data or the second IPMI data. In this way, when transmitting the first IPMI data to the BMC through the PCIE interface, the PCIE control unit may store, based on the address information of the storage space configured in the process of initializing the controller, the first IPMI data into the storage space corresponding to the PCIE interface. After generating the second IPMI data, the BMC may store, based on the address information of the storage space configured in the process of initializing the controller, the second IPMI data into the storage space corresponding to the PCIE interface, to implement a manner of transmitting IPMI data between the PCIE control unit and the BMC based on the storage space in the BMC through the PCIE interface.

In a possible implementation, when the processor communicates with the BMC through the IPMB interface, an IMU is disposed in the processor. When the processor core sends the first IPMI data to the BMC, the IMU may be configured to: receive the first IPMI data sent by the controller, transmit the first IPMI data to the IPMB interface, and send the first IPMI data to the BMC through the IPMB interface.

By using the foregoing electronic device, because the IMU is disposed in the processor, after the controller receives the first IPMI data generated by the processor core, the controller may transmit the first IPMI data to the IMU. The IMU is a processing node, in the processor, for an IPMB link between the processor and the BMC, and can transfer the first IPMI data to the IPMB interface, to implement IPMB interface-based data transmission.

In a possible implementation, when the processor communicates with the BMC through the IPMB interface, the IMU disposed in the processor may be further configured to send, to the controller through the IPMB interface, the second IPMI data generated by the BMC; and the IMU receives, through the IPMB interface, the second IPMI data sent by the BMC, and sends the second IPMI data to the controller.

By using the foregoing electronic device, because the IMU is disposed in the processor, the IMU is the processing node, in the processor, for the IPMB link between the processor and the BMC. After the BMC generates the second IPMI data, the IMU may obtain the second IPMI data from the BMC through the IPMB interface. Therefore, based on the IMU, the second IPMI data can be obtained from the IPMB interface, and transmitted to the processor core by using the controller, to complete efficient transmission of the second PIMI data from the BMC to the processor.

In a possible implementation, the controller may be a BT controller, or the controller may be a KCS controller.

By using the foregoing electronic device, because a BT or KCS communication manner may be used between the processor and the BMC, when the BT communication manner is used, the first PIMI data generated in the processor core is data of a PIMI_BT type; and the processor core may process, by using the BT controller, the first PIMI data generated in the processor core, and transmit the first PIMI data to the BMC. When the KCS communication manner is used, the first PIMI data generated in the processor core is data of a PIMI_KCS type; and the processor core may process, by using the KCS controller, the first PIMI data generated in the processor core, and transmit the first PIMI data to the BMC.

In a possible implementation, the processor includes at least two controllers. The at least two controllers include a controller for transmitting IPMI data corresponding to a BIOS system and a controller for transmitting IPMI data corresponding to an OS system.

According to the foregoing electronic device, because the processor core generates the first IPMI data in a running process of the OS system or the BIOS system, in this embodiment of this application, at least two controllers are disposed in the processor, and are respectively configured to transmit the IPMI data corresponding to the BIOS system and the IPMI data corresponding to the OS system. In a case in which the BIOS system may run simultaneously in the running process of the OS system, even if the IPMI data is generated simultaneously in the running processes of the OS system and the BIOS system, because IPMI data generated by different systems is transmitted by using different controllers, a controller use conflict problem that occurs when the processor core transmits, by using the controller, the IPMI data simultaneously generated in the running processes of the OS system and the BIOS system can be effectively resolved.

According to a second aspect, an embodiment of this application provides a processor. The processor is the processor in the electronic device in the first aspect. For beneficial effects, refer to the related descriptions of the first aspect. The processor includes a processor core and at least one controller.

The processor core is configured to: in a running process, generate first IPMI data that represents a status of the processor, and send the first PIMI data to the at least one controller. After receiving the first IPMI data sent by the processor core, the at least one controller sends the first IPMI data to a BMC through a PCIE interface or an IPMB interface disposed between the processor and the BMC.

The at least one controller receives, through the PCIE interface or the IPMB interface, second IPMI data that is sent by the BMC for managing the processor, and sends the second IPMI data to the processor core. The processor core receives the second IPMI data sent by the at least one controller, and adjusts the status of the processor based on the second IPMI data.

In a possible implementation, if the PCIE interface is disposed between the processor and the BMC, the processor further includes a PCIE control unit.

When the controller sends the first IPMI data to the BMC through the PCIE interface disposed between the processor and the BMC, the controller sends the first IPMI data to the PCIE control unit. The PCIE control unit sends the first IPMI data to the BMC through the PCIE interface.

In a possible implementation, when the controller receives, through the PCIE interface, the second IPMI data sent by the BMC, the PCIE control unit receives, through the PCIE interface, the second IPMI data sent by the BMC, and sends the second IPMI data to the controller; and the controller receives the second IPMI data sent by the PCIE control unit.

In a possible implementation, when the PCIE control unit sends the first IPMI data to the BMC through the PCIE interface, the PCIE control unit stores, through the PCIE interface, the first IPMI data into storage space that is in the BMC and that corresponds to the PCIE interface.

In a possible implementation, when the PCIE control unit receives, through the PCIE interface, the IPMI data sent by the BMC, the PCIE control unit obtains the second IPMI data from the storage space in the BMC through the PCIE interface.

In a possible implementation, in a process of initializing the controller, the processor core configures address information of the storage space. The address information indicates a storage location, in the BMC, of the first IPMI data or the second IPMI data transmitted through the PCIE interface.

In a possible implementation, if the IPMB interface is disposed between the processor and the BMC, the processor further includes an IMU.

When the controller sends the first IPMI data to the BMC through the IPMB interface, the controller sends the first IPMI data to the IMU. The IMU sends the first IPMI data to the BMC through the IPMB interface.

In a possible implementation, when the controller receives, through the IPMB interface, the second IPMI data sent by the BMC, the IMU receives, through the IPMB interface, the second IPMI data sent by the BMC, and sends the second IPMI data to the controller; and the controller receives the second IPMI data sent by the IMU.

According to a third aspect, an embodiment of this application provides a data transmission method. The method may be performed by at least one controller in a processor. For beneficial effects, refer to the related descriptions of the first aspect. In the method, the controller receives first IPMI data sent by a processor core in the processor, and sends the first IPMI data to a BMC through a PCIE interface or an IPMB interface disposed between the processor and the BMC. The first IPMI data represents a status of the processor. The controller receives, through the PCIE interface or the IPMB interface, second IPMI data sent by the BMC, and sends the second IPMI data to the processor core. The second IPMI data is a control instruction for managing the processor by the BMC.

In a possible implementation, the controller sends the first IPMI data to a PCIE control unit in the processor, so that the PCIE control unit sends the first IPMI data to the BMC through the PCIE interface.

In a possible implementation, the controller receives second IPMI data sent by the PCIE control unit in the processor. The second IPMI data is obtained by the PCIE control unit through the PCIE interface from storage space that is in the BMC and that corresponds to the PCIE interface.

In a possible implementation, the controller sends the first IPMI data to an IMU in the processor, so that the IMU sends the first IPMI data to the BMC through the IPMB interface.

In a possible implementation, the controller receives the second IPMI data sent by the IMU in the processor. The second IPMI data is sent by the BMC to the IMU through the IPMB interface.

According to a fourth aspect, an embodiment of this application provides a data transmission apparatus. The data access apparatus has a function of implementing behavior in the method instance in the third aspect. For beneficial effects, refer to the descriptions of the first aspect. Details are not described herein again. The function may be implemented by hardware, or may be implemented by executing corresponding software by hardware. The hardware or the software includes one or more units corresponding to the foregoing function. In a possible design, a structure of the apparatus includes a first transceiver unit and a second transceiver unit. These units can execute corresponding functions in the foregoing method example of the third aspect. For details, refer to the detailed descriptions of the method example. Details are not described herein again.

According to a fifth aspect, this application further provides a computer-readable storage medium. The computer-readable storage medium stores computer-executable instructions. When the computer-executable instructions are run on a computer, the computer is enabled to perform the method in the third aspect and the possible implementations of the third aspect.

According to a sixth aspect, this application further provides a computer program product including computer-executable instructions. When the computer program product runs on a computer, the computer is enabled to perform the method in the third aspect and the possible implementations of the third aspect.

### BRIEF DESCRIPTION OF DRAWINGS

FIG. 1 is a diagram of a structure of an electronic device according to an embodiment of this application;
FIG. 2 is a diagram of a structure of an electronic device according to an embodiment of this application;
FIG. 3 is a diagram of a data transmission method according to an embodiment of this application;
FIG. 4 is a diagram of a structure of a processor according to an embodiment of this application;
FIG. 5 is a diagram of a structure of a processor according to an embodiment of this application;
FIG. 6 is a diagram of a structure of an electronic device according to an embodiment of this application;
FIG. 7 is a diagram of a structure of an electronic device according to an embodiment of this application;
FIG. 8 is a diagram of a structure of an electronic device according to an embodiment of this application;
FIG. 9 is a diagram of a data transmission method according to an embodiment of this application;
FIG. 10 is a diagram of a structure of a processor according to an embodiment of this application;
FIG. 11 is a diagram of a structure of a processor according to an embodiment of this application;
FIG. 12 is a diagram of a structure of an electronic device according to an embodiment of this application;
FIG. 13 is a diagram of a structure of an electronic device according to an embodiment of this application; and
FIG. 14 is a diagram of a structure of a data transmission apparatus according to an embodiment of this application.

### DESCRIPTION OF EMBODIMENTS

First, some terms in this application are described, to facilitate understanding of a person skilled in the art.
1. An intelligent platform management interface (Intelligent Platform Management Interface, IPMI) is an industry standard; and defines a message-based, universal, and standardized abstract interface for information technology (Information Technology, IT) device management, shields underlying hardware details, and enables management software to be used across platforms. Physical health information of each hardware device in an electronic device may be monitored through the IPMI, for example, information such as a temperature, a voltage, a fan working status, and a power supply status. In addition, a working log of each hardware device in the electronic device may be further recorded through the IPMI, to prompt a user and subsequently locate a problem. Working status data of the hardware device is sent to a management device in a form of IPMI data. The management device may manage the hardware device in the electronic device based on the received IPMI data.
2. A BMC is a controller that is disposed in an electronic device and that runs independently of a host system (host system) of the electronic device. The BMC includes a double data rate (Double Data Rate, DDR) memory and a flash memory (FLASH), and has abundant bus and peripheral connection capabilities. The BMC may be configured to: perform monitoring and status management on a hardware device in the electronic device, for example, monitor a status such as a temperature, a voltage, a fan, and a power supply of each hardware device in the electronic device, and perform corresponding status adjustment on the hardware device, to ensure that the electronic device is in a healthy working state.
3. Peripheral component interconnect express (Peripheral Component Interconnect Express, PCIE) interface: The PCIE is a high-speed serial point-to-point dual-channel high-bandwidth transmission manner, and is mainly used on a mainboard of a computer or a server to connect to external devices. The PCIE interface adopts an end-to-end connection manner. Therefore, two devices are connected in each PCIE link; and exclusive channel bandwidth is configured for the connected devices, and bus bandwidth is not shared. Therefore, a high data transmission rate is implemented through the PCIE interface.
4. An intelligent platform management bus (Intelligent Platform Management Bus, IPMB) interface is an I2C-based bus that can provide standard interconnection between different hardware devices in an electronic device. The IPMB can be used as a standard interface for auxiliary or emergency management of add-in cards. The IPMB may be used for communication between a BMC and a peripheral controller (for example, an on-chip satellite management unit (Satellite Management Controller, SMC)). The IPMB may be used to transfer IPMI data.
5. A processor core (CPU Core) is a core chip in a CPU, may be made of monocrystalline silicon, is configured to complete all tasks of the processor, such as a computing command, a receiving or storing command, and data processing, and is the core of digital processing.
6. A block transfer (Block Transfer, BT) controller is a controller that is disposed in an electronic device and that is used when data is transmitted between a processor of the electronic device and a BMC in a BT communication manner. The BT controller may be compatible with an IPMI BT protocol stack invoked in a running process of an operating system (Operating System, OS) or a basic input/output system (Basic Input/Output System, BIOS). The BT controller communicates with a processor core through an on-chip bus, transfers, in the running process of the OS or the BIOS, IPMI data generated by the processor core to a communication interface (for example, a PCIE interface or an IPMB interface) between the processor and the BMC in the electronic device, and transmits the IPMI data to the BMC through the communication interface. Correspondingly, after the BMC generates IPMI data, the BT controller transmits, through the communication interface (for example, the PCIE interface or the IPMB interface) between the processor and the BMC in the electronic device, the IPMI data generated by the BMC to the processor core. In this way, IPMI data transmission between the processor and the BMC in the electronic device is implemented.
7. A keyboard controller style (Keyboard Controller Style, KCS) controller is a controller that is disposed in an electronic device and that is used when data is transmitted between a processor and a BMC in the electronic device in a KCS communication manner. The KCS controller may be compatible with an IPMI KCS protocol stack invoked in a running process of an OS or a BIOS. The KCS controller communicates with a processor core through an on-chip bus, transfers, in the running process of the OS or the BIOS, IPMI data generated by the processor core to a communication interface (for example, a PCIE interface or an IPMB interface) between the processor and the BMC in the electronic device, and transmits the IPMI data to the BMC through the communication interface. Correspondingly, after the BMC generates IPMI data, the KCS controller transmits, through the communication interface (for example, the PCIE interface or the IPMB interface) between the processor and the BMC in the electronic device, the IPMI data generated by the BMC to the processor core. In this way, IPMI data transmission between the processor and the BMC in the electronic device is implemented.
8. An intelligent management unit (Intelligent Management Unit, IMU) is an intelligent management unit in a processor and is configured to manage and control a data center. As a management end of the data center, the IMU can work with a BMC to jointly complete monitoring a node in the data center. Functions that can be implemented by the IMU include: fault preprocessing and error record reporting, security root of trust, energy efficiency management, and internal management of a processor.
9. A BIOS is the first software loaded when an electronic device (such as a terminal device or a server) is started, and is a group of programs that are built into a read-only memory (Read-Only Memory, ROM) chip on a mainboard of the electronic device. The BIOS stores the most important basic input and output programs of the electronic device, a self-test program after power-on, and a system auto-start program. A main function of the BIOS is to provide the bottommost and most direct hardware setting and control for the electronic device. In this application, after the electronic device is powered on, the BIOS starts to run, and the BIOS may initialize a controller in the electronic device and a communication link between the controller and a BMC.
10. An OS is the most basic and important basic system software in an electronic device, controls and manages hardware and software resources of the entire electronic device, and appropriately organizes and schedules work and resource allocation of the electronic device, thereby further providing an interface and a running environment for a user and other software.
11. "A plurality of" means two or more than two.

For any electronic device, to facilitate monitoring and management of a status of each hardware device in the electronic device, a BMC is used to obtain working status data of the hardware device in the electronic device in real time. When a status of the hardware device in the electronic device needs to be adjusted, the BMC sends a control instruction to a processor in the electronic device, to adjust a working status of the hardware device. An embodiment of this application provides a solution for data transmission between a processor of an electronic device and a BMC.

To make the objectives, technical solutions, and advantages of this application clearer, the following further describes this application in detail with reference to the accompanying drawings.

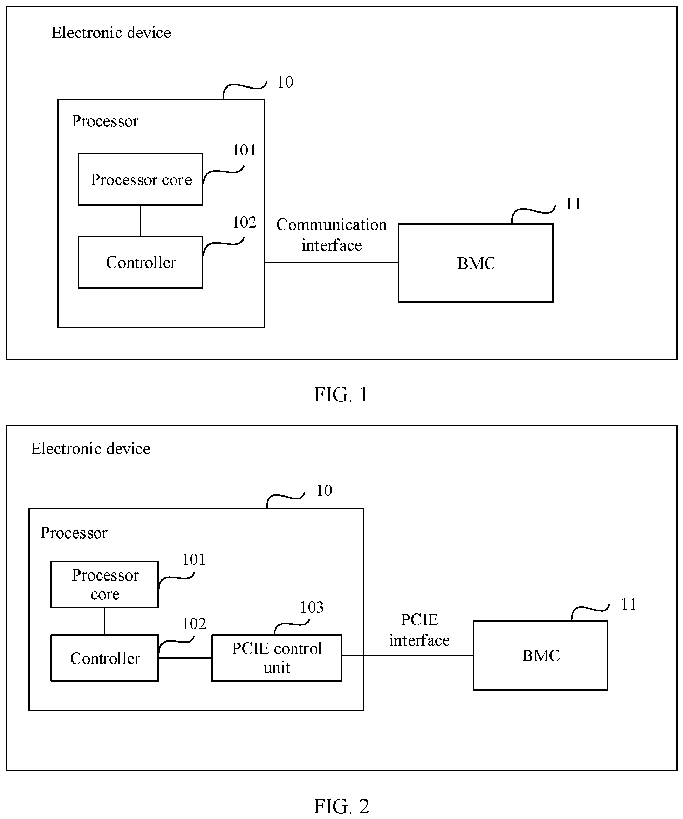

As shown in FIG. 1, an embodiment of this application is applicable to an electronic device. The electronic device includes a processor 10 and a BMC 11. A communication interface is disposed between the processor 10 and the BMC 11. The processor 10 includes a processor core 101 and at least one controller 102 (FIG. 1 shows one controller 102, but is not limited to one controller 102).

Optionally, the communication interface disposed between the processor 10 and the BMC 11 may be a PCIE interface or an IPMB interface. Data may be transmitted between the processor 10 and the BMC 11 through the PCIE interface or the IPMB interface.

The data transmitted between the processor 10 and the BMC 11 includes: first IPMI data sent by the processor 10 to the BMC 11, and second IPMI data sent by the BMC 11 to the processor 10.

The first IPMI data is data that represents a status of the processor 10. For example, the data that represents the status of the processor 10 may be an operating status parameter of each hardware device in the electronic device, for example, a parameter such as a temperature or a voltage.

The second IPMI data is a control instruction for managing the processor 10 by the BMC 11. For example, the control instruction may be turning on a fan in the electronic device.

The following separately describes functions of the components in FIG. 1 with respect to data transmission processes of the first IPMI data and the second IPMI data.

In the data transmission process in which the processor 10 sends the first IPMI data to the BMC 11, the processor core 101 generates the first IPMI data in a running process, and sends the first PIMI data to the controller 102. After receiving the first IPMI data sent by the processor core 101, the controller 102 sends the first IPMI data to the BMC 11 through the PCIE interface or the IPMB interface. The BMC 11 is configured to: receive the first IPMI data, and manage the processor 10 based on the first IPMI data.

In the data transmission process in which the BMC 11 sends the second IPMI data to the processor 10, the BMC 11 is configured to: generate the second IPMI data for managing the processor 10, and send the second IPMI data to the controller 102 through the PCIE interface or the IPMB interface. After receiving, through the PCIE interface or the IPMB interface, the second IPMI data sent by the BMC 11, the controller 102 sends the second IPMI data to the processor core 101. The processor core 101 receives the second IPMI data sent by the controller 102, and adjusts the status of the processor 10 based on the second IPMI data.

In this embodiment of this application, the IPMI data may be transmitted through the PCIE interface or the IPMB interface disposed between the processor and the BMC. The following separately describes two different solutions of performing transmission through the PCIE interface or the IPMB interface.

### I. The IPMI data is transmitted between the processor and the BMC through the PCIE interface.

In this embodiment of this application, when the processor 10 and the BMC 11 perform data transmission through the PCIE interface, an optional implementation is that corresponding PCIE nodes are respectively disposed in the processor 10 and the BMC 11, to process data that needs to be transmitted through the PCIE interface. As shown in FIG. 2, the processor 10 further includes a PCIE control unit 103 (for example, the PCIE control unit may be a PCIE root complex (Root Complex, RC)), and the PCIE control unit 103 in the processor 10 is mapped to a PCIE endpoint device (EndPoint, EP) in the BMC 11.

In the process in which the processor 10 sends the first IPMI data to the BMC 11, the processor core 101 generates the first IPMI data in the running process, and sends the first PIMI data to the controller 102. After receiving the first IPMI data sent by the processor core 101, the controller 102 sends the first IPMI data to the PCIE control unit 103. The PCIE control unit 103 sends the first IPMI data to the BMC 11 through the PCIE interface.

Correspondingly, in the process in which the BMC 11 sends the second IPMI data to the processor 10, the BMC 11 generates the second IPMI data for managing the processor 10. The PCIE control unit 103 receives, through the PCIE interface, the second IPMI data sent by the BMC 11, and sends the second IPMI data to the controller 102. The controller 102 sends the second IPMI data to the processor core 101.

In this embodiment of this application, in a running process of the electronic device, the data may be transmitted between the BMC and the processor through the PCIE interface. Through the PCIE interface, the BMC may obtain the first IPMI data that indicates the status of the processor, to learn of a working status of each hardware device in the electronic device; and monitor and manage the status of each hardware device in the electronic device based on the obtained first IPMI data. In addition, when the BMC sends the control instruction to the processor, the BMC transmits, to the processor through the PCIE interface, the second IPMI data used for managing the processor, to transmit the IPMI data between the BMC and the processor through the PCIE interface. In addition, because transmission efficiency at the PCIE interface is high, the IPMI data is transmitted through the PCIE interface disposed between the processor and the BMC, to improve efficiency of data transmission between the processor and the BMC in the electronic device.

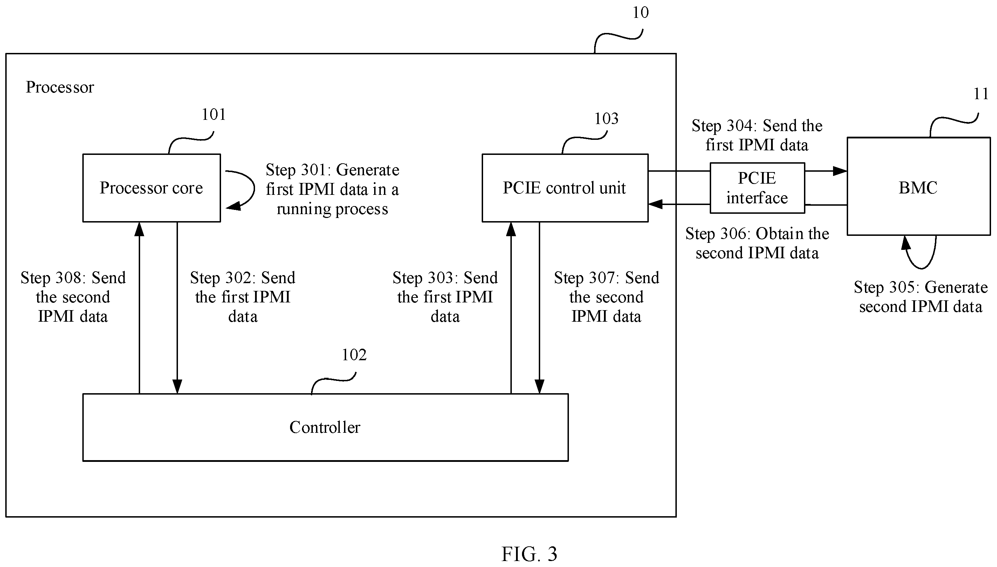

The following describes a data transmission method provided in an embodiment of this application with reference to FIG. 3. The method includes the following steps.

Step 301: In a running process, a processor core 101 generates first IPMI data that represents a status of a processor.

The first PIMI data in this embodiment of this application is generated in a process in which the processor core 101 in an electronic device runs a BIOS or an OS. For example, the BIOS is a system that runs after the electronic device is started. In a running process of the BIOS, the processor core 101 may send initialization information of the electronic device to a BMC 11 as the first PIMI data. For example, the initialization information may be information about a memory or another hardware device of the electronic device. For another example, in a running process of the OS, if a running fault occurs in the electronic device, the processor core 101 sends fault information as the first PIMI data to the BMC 11. For example, the fault information may be that a temperature of a mainboard is excessively high.

Step 302: The processor core 101 sends the first IPMI data to a controller 102.

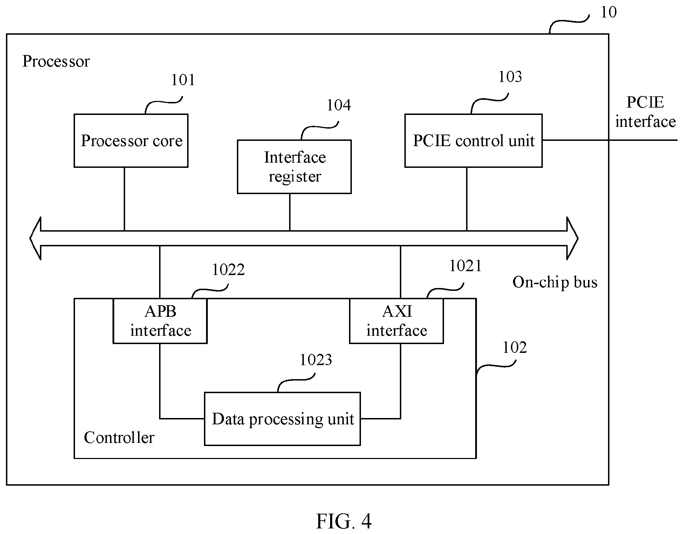

FIG. 4 is a diagram of a structure of a processor. The processor 10 includes a processor core 101, a controller 102, a PCIE control unit 103, and an interface register 104. When data is transmitted between the processor 10 and the BMC 11 in a BT communication manner, the interface register 104 is a register based on a BT protocol, and is compatible with an IPMI BT protocol stack invoked in a running process of the processor core 101. When data is transmitted between the processor 10 and the BMC 11 in a KCS communication manner, the interface register 104 is a register based on a KCS protocol, and is compatible with an IPMI KCS protocol stack invoked in the running process of the processor core 101.

The processor core 101, the controller 102, the PCIE control unit 103, and the interface register 104 are connected through an on-chip bus. The controller 102 further includes an advanced extensible interface (Advanced eXtensible Interface, AXI) 1021, an advanced peripheral bus (Advanced Peripheral Bus, APB) interface 1022, and a data processing unit 1023. The APB interface 1022 is a slave (Slave) interface of the controller 102. The AXI interface 1021 is a master (Master) interface of the controller 102.

After generating the first IPMI data, the processor core 101 writes the first IPMI data into the interface register 104 through the on-chip bus. The data processing unit 1023 reads the first IPMI data from the interface register 104 through the APB interface 1022.

Step 303: The controller 102 sends the first IPMI data to the PCIE control unit 103.

When the controller 102 sends the first IPMI data to the PCIE control unit 103, based on the diagram of the structure of the processor shown in FIG. 4, after the data processing unit 1023 in the controller 102 obtains the first IPMI data, the data processing unit 1023 sends the first IPMI data to the AXI interface 1021, and sends the first IPMI data to the PCIE control unit 103 through the AXI interface 1021 and the on-chip bus.

Step 304: The PCIE control unit 103 sends the first IPMI data to the BMC 11 through a PCIE interface.

In this embodiment of this application, storage space in the BMC 11 is pre-allocated to the PCIE interface.

When the PCIE control unit 103 sends the first IPMI data to the BMC 11, the PCIE control unit 103 stores, through the PCIE interface, the first IPMI data into the storage space that is in the BMC 11 and that corresponds to the PCIE interface. The BMC 11 obtains the first IPMI data from the storage space corresponding to the PCIE interface.

In implementation, the BMC 11 may determine, in a manner of periodically polling the storage space corresponding to the PCIE interface, whether the storage space corresponding to the PCIE interface includes the first IPMI data stored by the PCIE control unit 103 through the PCIE interface. Alternatively, after the processor core 101 sends the generated first PIMI data to the controller 102, the processor core 101 sends a first notification message to the BMC 11, to notify the BMC 11 that new first PIMI data is stored into the storage space corresponding to the PCIE interface. The first notification message sent by the processor core 101 to the BMC 11 may be a first interrupt signal sent through chip pins connected between the processor 10 and the BMC 11.

In this embodiment of this application, in a process of initializing the controller and a PCIE communication link between the processor and the BMC, the storage space in the BMC 11 is allocated to the PCIE interface, and address information of the storage space that is in the BMC 11 and that corresponds to the PCIE interface is notified to the PCIE control unit 103.

The following describes the process of initializing the controller and the PCIE communication link between the processor and the BMC.

After the electronic device is started, the processor core 101 runs the BIOS system. In the running process of the BIOS system, the processor core 101 initializes the PCIE communication link between the processor core 101 and the BMC 11, and configures the address information of the storage space that is in the BMC 11 and that corresponds to the PCIE interface. The address information indicates a storage location, in the BMC 11, of the first IPMI data or second IPMI data transmitted through the PCIE interface. The address information of the storage space includes but is not limited to a base address register (Base Address Register, BAR) and a secondary bus number (Secondary Bus Number).

In addition, in the running process of the BIOS system, the controller 102 may be further initialized. Steps of initializing the controller 102 in this embodiment of this application include:
a. Forbid state machine transition of the controller 102, so that the controller 102 is in a disabled state.
b. Configure related functions such as timeout and interrupt of the controller 102.
c. Enable state machine transition of the controller 102, so that the controller 102 starts to work.

If the processor 10 in this embodiment of this application includes a plurality of controllers 102, an initialization operation is performed on each controller 102, that is, the foregoing initialization steps are performed on each controller 102.

Step 305: The BMC 11 generates the second IPMI data for managing the processor 10.

In this embodiment of this application, after the BMC 11 receives the first IPMI data, the BMC 11 may learn of a current status of the processor based on the first IPMI data, and may obtain, through analysis, a working status of a hardware device in the electronic device based on the first PIMI data. The BMC 11 generates, based on the working status of the hardware device in the electronic device, a control instruction for managing the processor 10, to adjust the working status of the hardware device in the electronic device by managing the processor 10.

The BMC 11 generates the control instruction for managing the processor 10, and sends the generated control instruction as the second IPMI data to the processor 10.

Step 306: The PCIE control unit 103 obtains, through the PCIE interface, the second IPMI data sent by the BMC 11.

In this embodiment of this application, after generating the second IPMI data, the BMC 11 stores the second IPMI data into the storage space corresponding to the PCIE interface. The PCIE control unit 103 obtains, through the PCIE interface, the second IPMI data from the storage space corresponding to the PCIE interface.

In implementation, the PCIE control unit 103 may determine, in the manner of periodically polling the storage space corresponding to the PCIE interface, whether the storage space corresponding to the PCIE interface includes the second IPMI data stored in the BMC 11. Alternatively, after the BMC 11 stores the generated second PIMI data into the storage space corresponding to the PCIE interface, the BMC 11 sends a second notification message to the processor core 101 to notify the processor core 101 that new first PIMI data is stored into the storage space corresponding to the PCIE interface. The second notification message sent by the BMC 11 to the processor core 101 may be a second interrupt signal sent through chip pins connected between the processor 10 and the BMC 11. The processor core 101 indicates, through the on-chip bus, the PCIE control unit 103 to obtain the second IPMI data from the storage space corresponding to the PCIE interface.

Step 307: The PCIE control unit 103 sends the second IPMI data to the controller 102.

When the PCIE control unit 103 sends the second IPMI data to the controller 102, based on the diagram of the structure of the processor shown in FIG. 4, the PCIE control unit 103 transmits the second IPMI data to the AXI interface 1021 through the on-chip bus, and sends the second IPMI data to the data processing unit 1023 in the controller 102 through the AXI interface 1021.

Step 308: The controller 102 sends the second IPMI data to the processor core 101.

When the second IPMI data is sent to the processor core 101, after receiving the second IPMI data, the data processing unit 1023 transmits the second IPMI data to the APB interface 1022, and writes the second IPMI data into the interface register 104 through the APB interface 1022 and the on-chip bus. The processor core 101 obtains the second IPMI data from the interface register 104 through the on-chip bus.

In this embodiment of this application, after receiving the second IPMI data sent by the BMC 11, the processor core 101 adjusts the status of the processor 10. A manner of adjusting the status of the processor 10 includes but is not limited to adjusting some operating parameters of the processor 10, or adjusting an operating parameter of another hardware device connected to the processor 10, to adjust the status of the processor 10.

In this embodiment of this application, the processor core 101 generates the first IPMI data in the running process of the OS system or the BIOS system, and needs to send the generated first IPMI data to the BMC 11 by using the controller 102. If the BIOS system may simultaneously run in the running process of the OS system, when first IPMI data is simultaneously generated in the running processes of the OS system and the BIOS system, the processor core 101 needs to transmit, by using the controller 102, the first IPMI data simultaneously generated in the running processes of the OS system and the BIOS system. As a result, a use conflict of the controller 102 occurs.

Based on the foregoing problem, two controllers may be disposed in the processor 10 in this embodiment of this application. One controller is configured to: process first IPMI data generated in the running process of the OS system, and process second IPMI data returned by the BMC 11 for the first IPMI data generated in the running process of the OS system. The other controller is configured to: process first IPMI data generated in the running process of the BIOS system, and process second IPMI data returned by the BMC 11 for the first IPMI data generated in the running process of the BIOS system. In addition, each controller corresponds to one interface register.

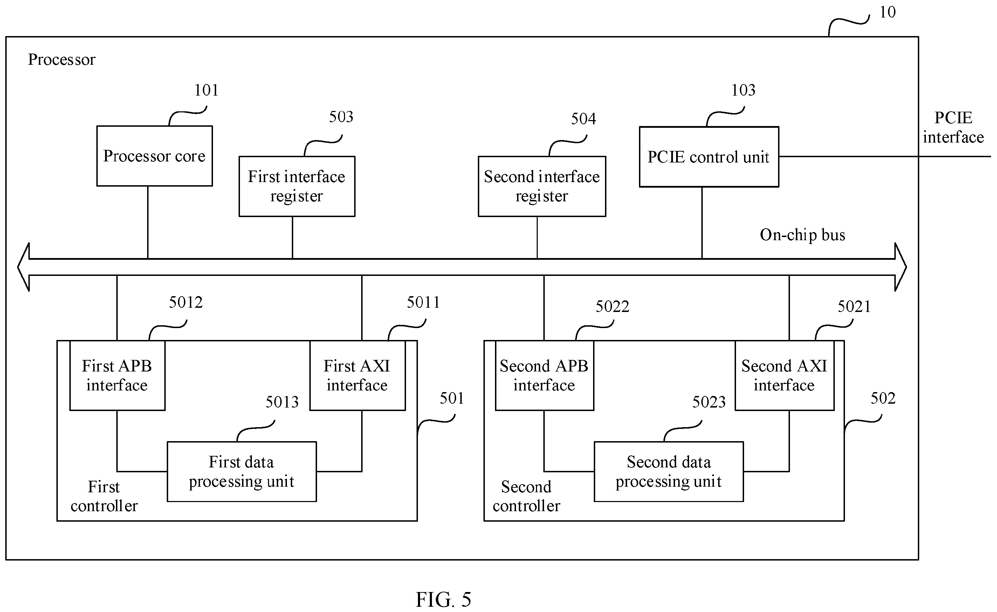

FIG. 5 is a diagram of a structure of a processor. The processor 10 includes a processor core 101, a first controller 501, a second controller 502, a PCIE control unit 103, a first interface register 503 corresponding to the first controller 501, and a second interface register 504 corresponding to the second controller 502. The processor core 101, the first controller 501, the second controller 502, the PCIE control unit 103, the first interface register 503, and the second interface register 504 are connected through an on-chip bus.

The first controller 501 and the first interface register 503 are configured to process IPMI data corresponding to an OS system. The IPMI data includes first IPMI data and/or second IPMI data. The second controller 502 and the second interface register 504 are configured to process IPMI data corresponding to a BIOS system. The IPMI data includes first IPMI data and/or second IPMI data.

The first controller 501 includes a first AXI interface 5011, a first APB interface 5012, and a first data processing unit 5013. The second controller 502 includes a second AXI interface 5021, a second APB interface 5022, and a second data processing unit 5023.

In addition, in this embodiment of this application, storage space that is in a BMC 11 and that is used to store the IPMI data corresponding to the OS system may be the same as or different from storage space that is used to store the IPMI data corresponding to the BIOS system.

If the storage space that is in the BMC 11 and that is used to store the IPMI data corresponding to the OS system is different from the storage space that is used to store the IPMI data corresponding to the BIOS system, in a process in which the processor core 101 initializes a PCIE communication link between the processor and the BMC, the processor core 101 allocates different storage space in the BMC 11 to the IPMI data corresponding to the OS system and the IPMI data corresponding to the BIOS system.

In a process in which the processor core 101 runs the OS system, if the processor core 101 generates first PIMI data, the processor core 101 writes the generated first PIMI data into the first interface register 503 through the on-chip bus. The first data processing unit 5013 in the first controller 501 obtains the first IPMI data from the first interface register 503 through the first AXI interface 5011 and the on-chip bus. The first data processing unit 5013 sends the first IPMI data to the PCIE control unit 103 through the first APB interface 5012. The PCIE control unit 103 stores, through the PCIE interface, the first IPMI data into the storage space that is in the BMC 11 and that is used to store the IPMI data corresponding to the OS system.

After the BMC 11 generates the second IPMI data returned for the first IPMI data corresponding to the OS system, the BMC 11 stores the second IPMI data into the storage space that is used to store the IPMI data corresponding to the OS system. The PCIE control unit 103 obtains the second IPMI data through the PCIE interface, and sends the second IPMI data to the first data processing unit 5013 through the first APB interface 5012. The first data processing unit 5013 writes the second IPMI data into the first interface register 503 through the first AXI interface 5011 and the on-chip bus. The processor core 101 obtains the second IPMI data from the first interface register 503 through the on-chip bus.

In a process in which the processor core 101 runs the BIOS system, if the processor core 101 generates first PIMI data, the processor core 101 writes the generated first PIMI data into the second interface register 504 through the on-chip bus. The second data processing unit 5023 in the second controller 502 obtains the first IPMI data from the second interface register 504 through the second AXI interface 5021 and the on-chip bus. The second data processing unit 5023 sends the first IPMI data to the PCIE control unit 103 b through the second APB interface 5022. The PCIE control unit 103 stores, through the PCIE interface, the first IPMI data into the storage space that is in the BMC 11 and that is used to store the IPMI data corresponding to the BIOS system.

After the BMC 11 generates the second IPMI data returned for the first IPMI data corresponding to the BIOS system, the BMC 11 stores the second IPMI data into the storage space that is used to store the IPMI data corresponding to the BIOS system. The PCIE control unit 103 obtains the second IPMI data through the PCIE interface, and sends the second IPMI data to the second data processing unit 5023 through the second APB interface 5022. The second data processing unit 5023 writes the second IPMI data into the second interface register 504 through the second AXI interface 5021 and the on-chip bus. The processor core 101 obtains the second IPMI data from the second interface register 504 through the on-chip bus.

With reference to several specific examples, the following describes a method for transmitting data through the PCIE interface between the processor 10 and the BMC 11.
1. It is assumed that description is provided by using an example in which data is transmitted between a processor and a BMC in an electronic device in a BT communication manner, and the processor includes one controller.

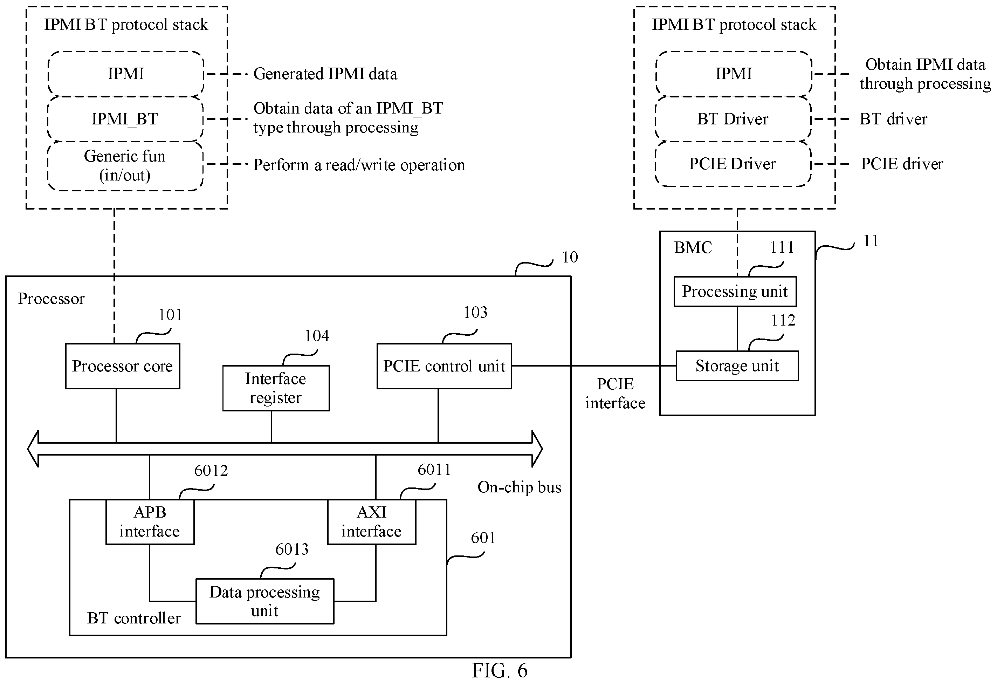

FIG. 6 is a diagram of a structure of an electronic device. The electronic device includes a processor 10 and a BMC 11. A PCIE interface is disposed between the processor 10 and the BMC 11. The processor 10 includes a processor core 101, a BT controller 601, a PCIE control unit 103, and an interface register 104. The processor core 101, the BT controller 601, the PCIE control unit 103, and the interface register 104 are connected through an on-chip bus. The BT controller 601 further includes an AXI interface 6011, an APB interface 6012, and a data processing unit 6013. The BMC 11 includes a processing unit 111 and a storage unit 112.

In a running process, the processor core 101 processes generated IPMI data to obtain first PIMI data of an IPMI_BT type by invoking an IPMI BT protocol stack, and writes the first PIMI data into the interface register 104 through the on-chip bus. The data processing unit 6013 in the BT controller 601 obtains the first IPMI data from the interface register 104 through the AXI interface 6011 and the on-chip bus. The data processing unit 6013 sends the first IPMI data to the PCIE control unit 103 through the APB interface 6012. The PCIE control unit 103 stores, through the PCIE interface, the first IPMI data into storage space that is in the storage unit 112 of the BMC 11 and that corresponds to the PCIE interface. The processing unit 111 of the BMC 11 obtains the first PIMI data from the storage space corresponding to the PCIE interface, and parses the obtained first PIMI data by invoking a PCIE driver (Driver) and a BT driver in an upper-layer PIMI BT protocol stack, to obtain IPMI-type data.

Correspondingly, after generating the second PIMI data, the processing unit 111 of the BMC 11 stores the second PIMI data into the storage space that is in the storage unit 112 and that corresponds to the PCIE interface. The PCIE control unit 103 obtains, through the PCIE interface, the second PIMI data from the storage space corresponding to the PCIE interface, and sends the second IPMI data to the data processing unit 6013 through the APB interface 6012. The data processing unit 6013 writes the second IPMI data into the interface register 104 through the AXI interface 6011 and the on-chip bus. The processor core 101 obtains the second IPMI data from the interface register 104 through the on-chip bus, and parses and processes the obtained second IPMI data by invoking an upper-layer IPMI BT protocol stack.

2. It is assumed that description is provided by using an example in which data is transmitted between a processor and a BMC in an electronic device in a KCS communication manner, and the processor includes one controller.

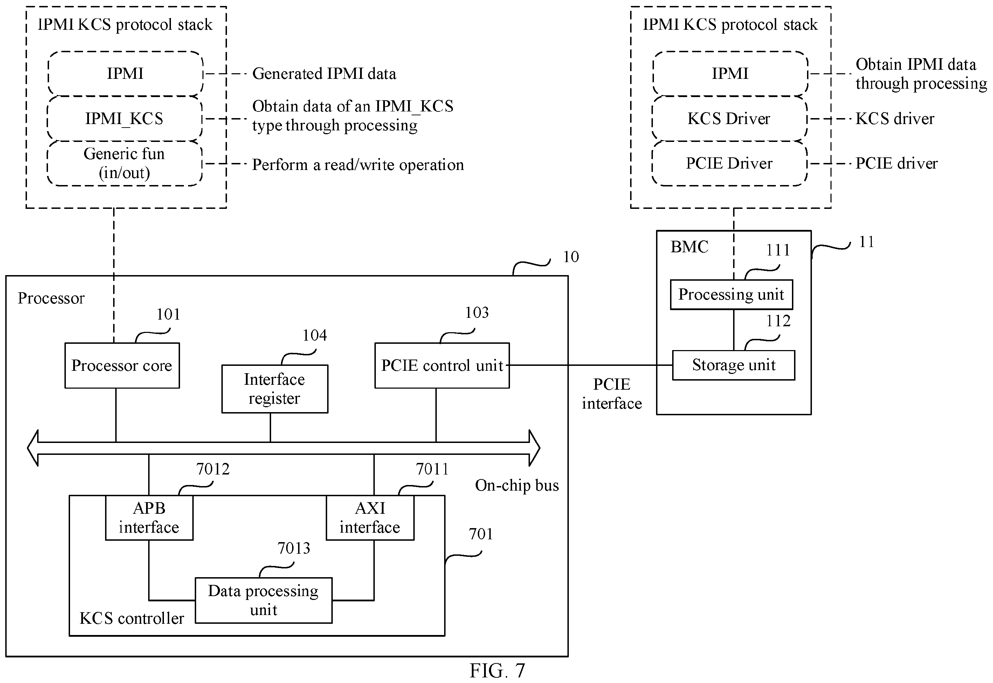

FIG. 7 is a diagram of a structure of an electronic device. The electronic device includes a processor 10 and a BMC 11. A PCIE interface is disposed between the processor 10 and the BMC 11. The processor 10 includes a processor core 101, a KCS controller 701, a PCIE control unit 103, and an interface register 104. The processor core 101, the KCS controller 701, the PCIE control unit 103, and the interface register 104 are connected through an on-chip bus. The KCS controller 701 further includes an AXI interface 7011, an APB interface 7012, and a data processing unit 7013. The BMC 11 includes a processing unit 111 and a storage unit 112.

In a running process, the processor core 101 processes generated IPMI data to obtain first PIMI data of an IPMI_KCS type by invoking an IPMI KCS protocol stack, and writes the first PIMI data into the interface register 104 through the on-chip bus. The data processing unit 7013 in the KCS controller 701 obtains the first IPMI data from the interface register 104 through the AXI interface 7011 and the on-chip bus. The data processing unit 7013 sends the first IPMI data to the PCIE control unit 103 through the APB interface 7012. The PCIE control unit 103 stores, through the PCIE interface, the first IPMI data into storage space that is in the storage unit 112 of the BMC 11 and that corresponds to the PCIE interface. The processing unit 111 of the BMC 11 obtains the first PIMI data from the storage space corresponding to the PCIE interface, and parses the obtained first PIMI data by invoking a PCIE driver and a KCS driver in an upper-layer PIMI KCS protocol stack, to obtain IPMI-type data.

Correspondingly, after generating the second PIMI data, the processing unit 111 of the BMC 11 stores the second PIMI data into the storage space that is in the storage unit 112 and that corresponds to the PCIE interface. The PCIE control unit 103 obtains, through the PCIE interface, the second PIMI data from the storage space corresponding to the PCIE interface, and sends the second IPMI data to the data processing unit 7013 through the APB interface 7012. The data processing unit 7013 writes the second IPMI data into the interface register 104 through the AXI interface 7011 and the on-chip bus. The processor core 101 obtains the second IPMI data from the interface register 104 through the on-chip bus, and parses and processes the obtained second IPMI data by invoking an upper-layer IPMI KCS protocol stack.

II. The IPMI data is transmitted between the processor and the BMC through the IPMB interface.

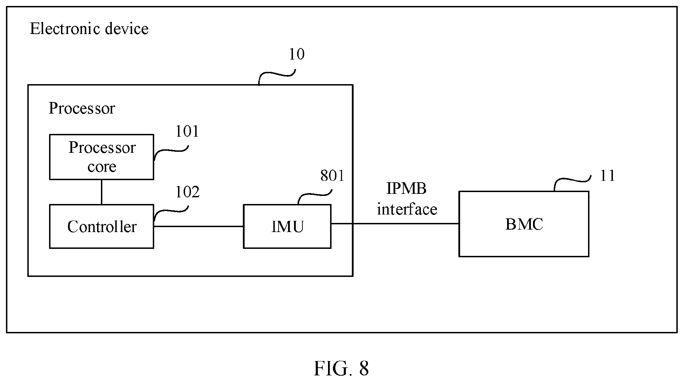

In this embodiment of this application, when the processor 10 and the BMC 11 perform data transmission through the IPMB interface, an optional implementation is that an IMU is disposed in the processor 10, to process data that needs to be transmitted through the IPMB interface. As shown in FIG. 8, the processor 10 includes an IMU 801.

In the process in which the processor 10 sends the first IPMI data to the BMC 11, the processor core 101 generates the first IPMI data in the running process, and sends the first PIMI data to the controller 102. After receiving the first IPMI data sent by the processor core 101, the controller 102 sends the first IPMI data to the IMU 801. The IMU 801 sends the first IPMI data to the BMC 11 through the IPMB interface.

Correspondingly, in the process in which the BMC 11 sends the second IPMI data to the processor 10, the BMC 11 generates the second IPMI data for managing the processor 10. The IMU 801 receives, through the IPMB interface, the second IPMI data sent by the BMC 11, and sends the second IPMI data to the controller 102. The controller 102 sends the second IPMI data to the processor core 101.

In this embodiment of this application, in a running process of the electronic device, the data may be transmitted between the BMC and the processor through the IPMB interface. Through the IPMB interface, the BMC may obtain the first IPMI data that indicates the status of the processor, to learn of a working status of each hardware device in the electronic device; and monitor and manage the status of each hardware device in the electronic device based on the obtained first IPMI data. In addition, when the BMC sends the control instruction to the processor, the BMC transmits, to the processor through the IPMB interface, the second IPMI data used for managing the processor, to transmit the IPMI data between the BMC and the processor through the IPMB interface. In addition, because transmission efficiency at the IPMB interface is high, the IPMI data is transmitted through the IPMB interface disposed between the processor and the BMC, to improve efficiency of data transmission between the processor and the BMC in the electronic device.

In this embodiment of this application, before the IPMI data is transmitted between the processor and the BMC through the IPMB interface, after the electronic device is started, the controller needs to be initialized in a running process of the BIOS system. For a process of initializing the controller, refer to the foregoing description.

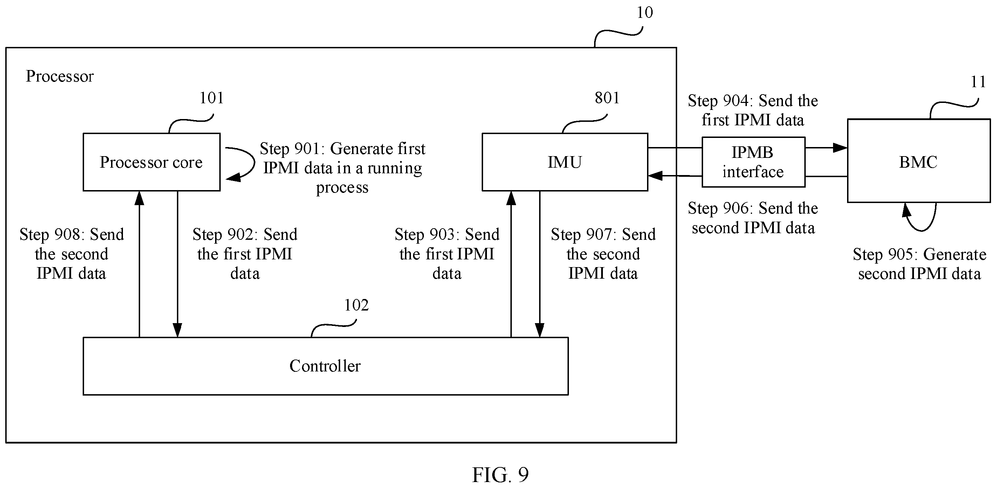

The following describes a data transmission method provided in an embodiment of this application with reference to FIG. 9. The method includes the following steps.

Step 901: In a running process, a processor core 101 generates first IPMI data that represents a status of a processor.

For a manner in which the processor core 101 generates the first IPMI data, refer to the foregoing descriptions. Details are not described herein again.

Step 902: The processor core 101 sends the first IPMI data to a controller 102.

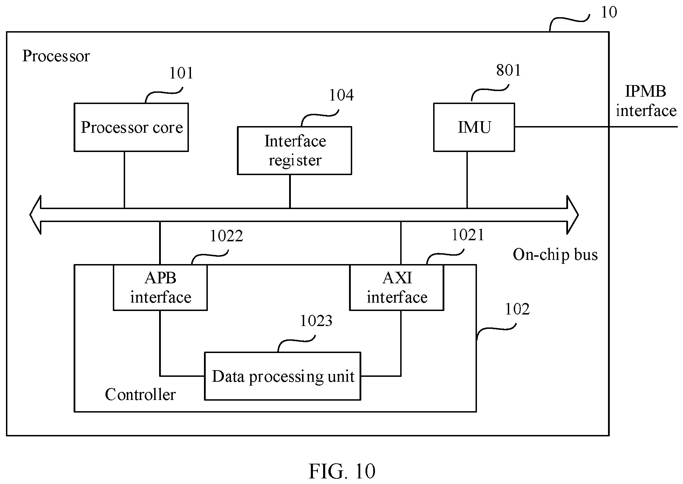

FIG. 10 is a diagram of a structure of a processor. The processor 10 includes a processor core 101, a controller 102, an IMU 801, and an interface register 104. When data is transmitted between the processor 10 and a BMC 11 in a BT communication manner, the interface register 104 is a register based on a BT protocol, and is compatible with an IPMI BT protocol stack invoked in a running process of the processor core 101. When data is transmitted between the processor 10 and the BMC 11 in a KCS communication manner, the interface register 104 is a register based on a KCS protocol, and is compatible with an IPMI KCS protocol stack invoked in the running process of the processor core 101.

The processor core 101, the controller 102, the IMU 801, and the interface register 104 are connected through an on-chip bus. The controller 102 further includes an AXI interface 1021, an APB interface 1022, and a data processing unit 1023.

After generating the first IPMI data, the processor core 101 writes the first IPMI data into the interface register 104 through the on-chip bus. The data processing unit 1023 reads the first IPMI data from the interface register 104 through the APB interface 1022.

Step 903: The controller 102 sends the first IPMI data to the IMU 801.

When the controller 102 sends the first IPMI data to the IMU 801, based on the diagram of the structure of the processor shown in FIG. 10, after the data processing unit 1023 in the controller 102 obtains the first IPMI data, the data processing unit 1023 sends the first IPMI data to the AXI interface 1021, and sends the first IPMI data to the IMU 801 through the AXI interface 1021 and the on-chip bus.

Step 904: The IMU 801 sends the first IPMI data to the BMC 11 through an IPMB interface.

When the IMU 801 sends the first IPMI data to the BMC 11, the IMU 801 sends the first IPMI data to the BMC 11 through the IPMB interface.

Step 905: The BMC 11 generates second IPMI data for managing the processor 10.

In this embodiment of this application, after the BMC 11 receives the first IPMI data, the BMC 11 may learn of a current status of the processor based on the first IPMI data, and may obtain, through analysis, a working status of a hardware device in the electronic device based on the first PIMI data. The BMC 11 generates, based on the working status of the hardware device in the electronic device, a control instruction for managing the processor 10, to adjust the working status of the hardware device in the electronic device by managing the processor 10.

The BMC 11 generates the control instruction for managing the processor 10, and sends the generated control instruction as the second IPMI data to the processor 10.

Step 906: The BMC 11 sends the second IPMI data to the IMU 801 through the IPMB interface.

Step 907: The IMU 801 sends the second IPMI data to the controller 102.

When the IMU 801 sends the second IPMI data to the controller 102, based on the diagram of the structure of the processor shown in FIG. 10, the IMU 801 transmits the second IPMI data to the AXI interface 1021 through the on-chip bus, and sends the second IPMI data to the data processing unit 1023 in the controller 102 through the AXI interface 1021.

Step 908: The controller 102 sends the second IPMI data to the processor core 101.

When the second IPMI data is sent to the processor core 101, after receiving the second IPMI data, the data processing unit 1023 transmits the second IPMI data to the APB interface 1022, and writes the second IPMI data into the interface register 104 through the APB interface 1022 and the on-chip bus. The processor core 101 obtains the second IPMI data from the interface register 104 through the on-chip bus.

In this embodiment of this application, after receiving the second IPMI data sent by the BMC 11, the processor core 101 adjusts the status of the processor 10. A manner of adjusting the status of the processor 10 includes but is not limited to adjusting some operating parameters of the processor 10, or adjusting an operating parameter of another hardware device connected to the processor 10, to adjust the status of the processor 10.

In this embodiment of this application, the processor core 101 generates the first IPMI data in the running process of the OS system or the BIOS system, and needs to send the generated first IPMI data to the BMC 11 by using the controller 102. If the BIOS system may simultaneously run in the running process of the OS system, when first IPMI data is simultaneously generated in the running processes of the OS system and the BIOS system, the processor core 101 needs to transmit, by using the controller 102, the first IPMI data simultaneously generated in the running processes of the OS system and the BIOS system. As a result, a use conflict of the controller 102 occurs.

Based on the foregoing problem, two controllers may be disposed in the processor 10 in this embodiment of this application. One controller is configured to: process first IPMI data generated in the running process of the OS system, and process second IPMI data returned by the BMC 11 for the first IPMI data generated in the running process of the OS system. The other controller is configured to: process first IPMI data generated in the running process of the BIOS system, and process second IPMI data returned by the BMC 11 for the first IPMI data generated in the running process of the BIOS system. In addition, each controller corresponds to one interface register.

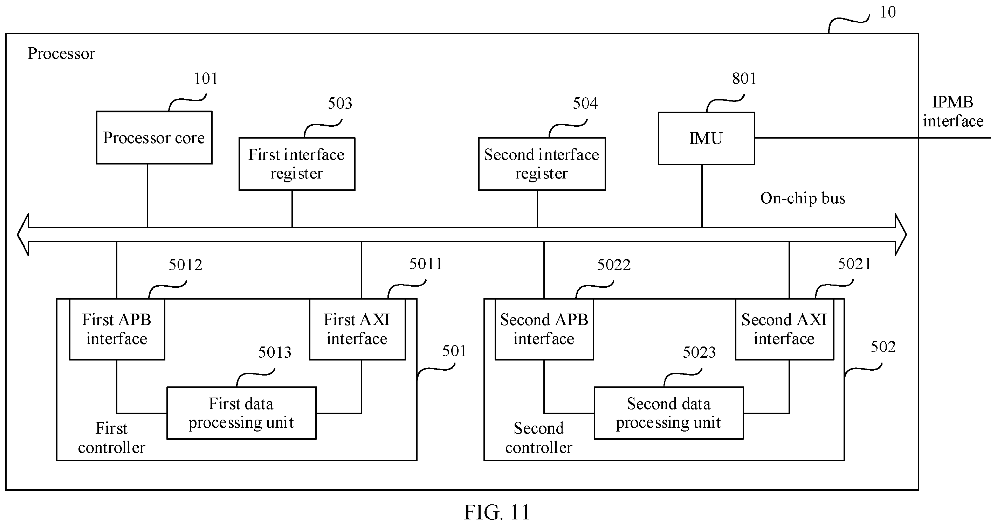

FIG. 11 is a diagram of a structure of a processor. The processor 10 includes a processor core 101, a first controller 501, a second controller 502, an IMU 801, a first interface register 503 corresponding to the first controller 501, and a second interface register 504 corresponding to the second controller 502. The processor core 101, the first controller 501, the second controller 502, the IMU 801, the first interface register 503, and the second interface register 504 are connected through an on-chip bus.

The first controller 501 and the first interface register 503 are configured to process IPMI data corresponding to an OS system. The IPMI data includes first IPMI data and/or second IPMI data. The second controller 502 and the second interface register 504 are configured to process IPMI data corresponding to a BIOS system. The IPMI data includes first IPMI data and/or second IPMI data.

The first controller 501 includes a first AXI interface 5011, a first APB interface 5012, and a first data processing unit 5013. The second controller 502 includes a second AXI interface 5021, a second APB interface 5022, and a second data processing unit 5023.

In a process in which the processor core 101 runs the OS system, if the processor core 101 generates first PIMI data, the processor core 101 writes the generated first PIMI data into the first interface register 503 through the on-chip bus. The first data processing unit 5013 in the first controller 501 obtains the first IPMI data from the first interface register 503 through the first AXI interface 5011 and the on-chip bus. The first data processing unit 5013 sends the first IPMI data to the IMU 801 through the first APB interface 5012. The IMU 801 sends the first IPMI data to the BMC 11 through an IPMB interface.

After the BMC 11 generates the second IPMI data returned for the first IPMI data corresponding to the OS system, the BMC 11 sends the second IPMI data to the IMU 801. The IMU 801 receives the second IPMI data through the IPMB interface, and sends the second IPMI data to the first data processing unit 5013 through the first APB interface 5012. The first data processing unit 5013 writes the second IPMI data into the first interface register 503 by using the first AXI interface 5011 and the on-chip bus. The processor core 101 obtains the second IPMI data from the first interface register 503 through the on-chip bus.

In a process in which the processor core 101 runs a BIOS system, if the processor core 101 generates first PIMI data, the processor core 101 writes the generated first PIMI data into the second interface register 504 through the on-chip bus. The second data processing unit 5023 in the second controller 502 obtains the first IPMI data from the second interface register 504 through the second AXI interface 5021 and the on-chip bus. The second data processing unit 5023 sends the first IPMI data to the IMU 801 through the second APB interface 5022. The IMU 801 sends the first IPMI data to the BMC 11 through an IPMB interface.

After the BMC 11 generates the second IPMI data returned for the first IPMI data corresponding to the BIOS system, the BMC 11 sends the second IPMI data to the IMU 801. The IMU 801 obtains the second IPMI data through the IPMB interface, and sends the second IPMI data to the second data processing unit 5023 through the second APB interface 5022. The second data processing unit 5023 writes the second IPMI data into the second interface register 504 through the second AXI interface 5021 and the on-chip bus. The processor core 101 obtains the second IPMI data from the second interface register 504 through the on-chip bus.

With reference to several specific examples, the following describes a method for transmitting data through the IPMB interface between the processor 10 and the BMC 11.
1. It is assumed that description is provided by using an example in which data is transmitted between a processor and a BMC in an electronic device in a BT communication manner, and the processor includes one controller.

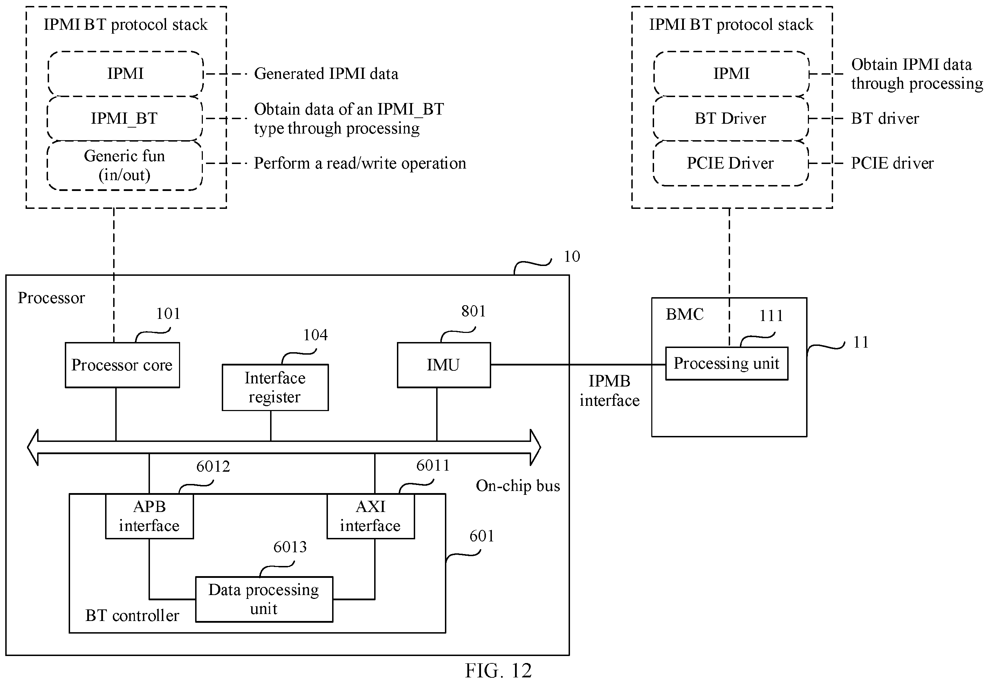

FIG. 12 is a diagram of a structure of an electronic device. The electronic device includes a processor 10 and a BMC 11. An IPMB interface is disposed between the processor 10 and the BMC 11. The processor 10 includes a processor core 101, a BT controller 601, an IMU 801, and an interface register 104. The processor core 101, the BT controller 601, the IMU 801, and the interface register 104 are connected through an on-chip bus. The BT controller 601 further includes an AXI interface 6011, an APB interface 6012, and a data processing unit 6013. The BMC 11 includes a processing unit 111.

In a running process, the processor core 101 processes generated IPMI data to obtain first PIMI data of an IPMI_BT type by invoking an IPMI BT protocol stack, and writes the first PIMI data into the interface register 104 through the on-chip bus. The data processing unit 6013 in the BT controller 601 obtains the first IPMI data from the interface register 104 through the AXI interface 6011 and the on-chip bus. The data processing unit 6013 sends the first IPMI data to the IMU 801 through the APB interface 6012. The IMU 801 sends the first IPMI data to the processing unit 111 of the BMC 11 through the IPMB interface. After receiving the first PIMI data, the processing unit 111 of the BMC 11 parses the obtained first PIMI data by invoking an IPMB driver (Driver) and a BT driver in an upper-layer PIMI BT protocol stack, to obtain IPMI-type data.

Correspondingly, after generating second PIMI data, the processing unit 111 of the BMC 11 sends the second PIMI data to the IMU 801. After receiving the second PIMI data, the IMU 801 sends the second IPMI data to the data processing unit 6013 through the APB interface 6012. The data processing unit 6013 writes the second IPMI data into the interface register 104 through the AXI interface 6011 and the on-chip bus. The processor core 101 obtains the second IPMI data from the interface register 104 through the on-chip bus, and parses and processes the obtained second IPMI data by invoking an upper-layer IPMI BT protocol stack.

2. It is assumed that description is provided by using an example in which data is transmitted between a processor and a BMC in an electronic device in a KCS communication manner, and the processor includes one controller.

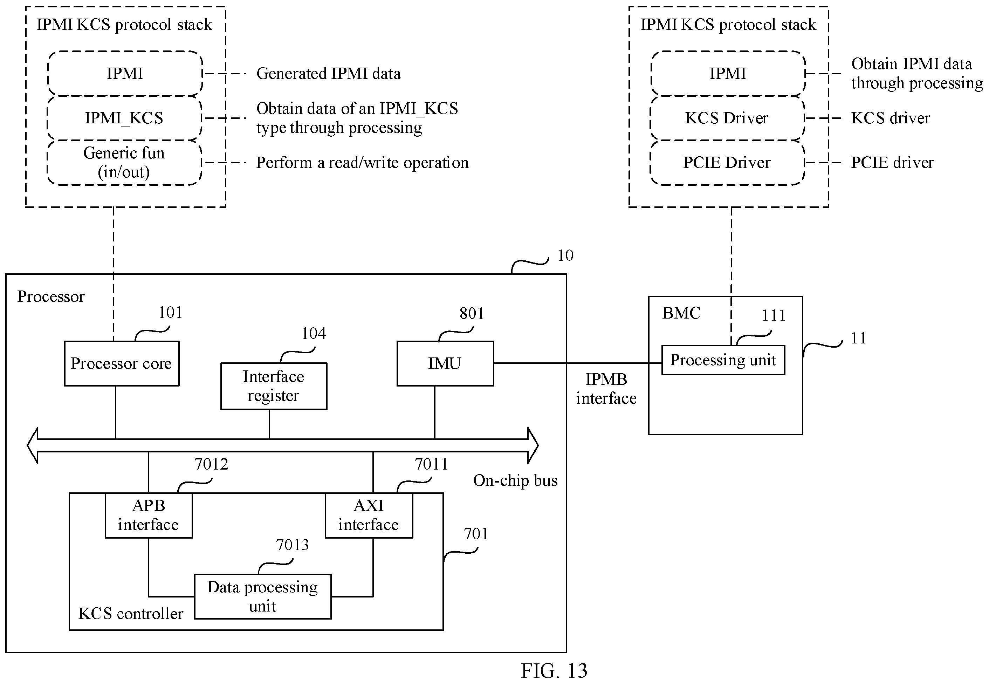

FIG. 13 is a diagram of a structure of an electronic device. The electronic device includes a processor 10 and a BMC 11. An IPMB interface is disposed between the processor 10 and the BMC 11. The processor 10 includes a processor core 101, a KCS controller 701, an IMU 801, and an interface register 104. The processor core 101, the KCS controller 701, the IMU 801, and the interface register 104 are connected through an on-chip bus. The KCS controller 701 further includes an AXI interface 7011, an APB interface 7012, and a data processing unit 7013. The BMC 11 includes a processing unit 111.

In a running process, the processor core 101 processes generated IPMI data to obtain first PIMI data of an IPMI_KCS type by invoking an IPMI KCS protocol stack, and writes the first PIMI data into the interface register 104 through the on-chip bus. The data processing unit 7013 in the KCS controller 701 obtains the first IPMI data from the interface register 104 through the AXI interface 7011 and the on-chip bus. The data processing unit 7013 sends the first IPMI data to the IMU 801 through the APB interface 7012. The IMU 801 sends the first IPMI data to the processing unit 111 of the BMC 11 through the IPMB interface. After receiving the first PIMI data, the processing unit 111 of the BMC 11 parses the obtained first PIMI data by invoking an IPMB driver and a KCS driver in an upper-layer PIMI KCS protocol stack, to obtain IPMI-type data.

Correspondingly, after generating second PIMI data, the processing unit 111 of the BMC 11 sends the second PIMI data to the IMU 801. After receiving the second PIMI data, the IMU 801 sends the second IPMI data to the data processing unit 7013 through the APB interface 7012. The data processing unit 7013 writes the second IPMI data into the interface register 104 through the AXI interface 7011 and the on-chip bus. The processor core 101 obtains the second IPMI data from the interface register 104 through the on-chip bus, and parses and processes the obtained second IPMI data by invoking an upper-layer IPMI KCS protocol stack.

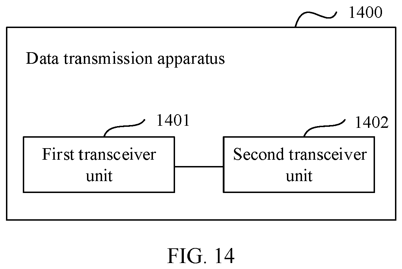

Based on a same inventive concept as the method embodiment, an embodiment of this application further provides a data transmission apparatus. The data transmission apparatus is configured to perform the method performed by the controller in the method embodiment shown in FIG. 3 or FIG. 9. For related features, refer to the foregoing method embodiment. Details are not described herein again. As shown in FIG. 14, a data transmission apparatus 1400 includes a first transceiver unit 1401 and a second transceiver unit 1402.

The first transceiver unit 1401 is configured to: receive first IPMI data sent by a processor core in a processor, and send the first IPMI data to a BMC through a PCIE interface or an IPMB interface disposed between the processor and the BMC. The first IPMI data represents a status of the processor.

The second transceiver unit 1402 is configured to: receive, through the PCIE interface or the IPMB interface, second IPMI data sent by the BMC, and send the second IPMI data to the processor core. The second IPMI data is a control instruction for managing the processor by the BMC.

In a possible implementation, the first transceiver unit 1401 is specifically configured to:
send the first IPMI data to a PCIE control unit in the processor, so that the PCIE control unit sends the first IPMI data to the BMC through the PCIE interface.

In a possible implementation, the second transceiver unit 1402 is specifically configured to:
receive the second IPMI data sent by the PCIE control unit in the processor, where the second IPMI data is obtained by the PCIE control unit through the PCIE interface from storage space that is in the BMC and that corresponds to the PCIE interface.

In a possible implementation, the first transceiver unit 1401 is specifically configured to:
send the first IPMI data to an IMU in the processor, so that the IMU sends the first IPMI data to the BMC through the IPMB interface.

In a possible implementation, the second transceiver unit 1402 is specifically configured to:
receive the second IPMI data sent by the IMU in the processor, where the second IPMI data is sent by the BMC to the IMU through the IPMB interface.

It should be noted that, in embodiments of this application, division into units is an example, and is merely a logical function division. In actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

All or some of the foregoing embodiments may be implemented through software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions can alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. **In** this case, if the modifications and variations made to this application fall within the scope of the claims of this application and equivalent technologies thereof, this application is intended to cover these modifications and variations.

## Claims

1. An electronic device, wherein the electronic device comprises a processor and a baseboard management controller BMC, a peripheral component interconnect express PCIE interface or an intelligent platform management bus IPMB interface is disposed between the processor and the BMC, and the processor comprises a processor core and at least one controller;
the processor core is configured to: generate first intelligent platform management interface IPMI data in a running process, and send the first PIMI data to the at least one controller, wherein the first IPMI data represents a status of the processor; and receive second IPMI data sent by the at least one controller, and adjust the status of the processor based on the second IPMI data, wherein the second IPMI data is a control instruction for managing the processor by the BMC;
the at least one controller is configured to: after the first IPMI data sent by the processor core is received, send the first IPMI data to the BMC through the PCIE interface or the IPMB interface; and receive, through the PCIE interface or the IPMB interface, the second IPMI data sent by the BMC, and send the second IPMI data to the processor core; and
the BMC is configured to: receive the first IPMI data, and manage the processor based on the first IPMI data; and send the second IPMI data to the controller through the PCIE interface or the IPMB interface.

2. The electronic device according to claim 1, wherein if the PCIE interface is disposed between the processor and the BMC, the processor further comprises a PCIE control unit;
when the controller sends the first IPMI data to the BMC through the PCIE interface, details are as follows:
the controller sends the first IPMI data to the PCIE control unit; and
the PCIE control unit sends the first IPMI data to the BMC through the PCIE interface.

3. The electronic device according to claim 2, wherein when the controller receives, through the PCIE interface, the second IPMI data sent by the BMC, details are as follows:
the PCIE control unit receives, through the PCIE interface, the second IPMI data sent by the BMC, and sends the second IPMI data to the controller; and
the controller receives the second IPMI data sent by the PCIE control unit.

4. The electronic device according to claim 2, wherein when the PCIE control unit sends the first IPMI data to the BMC through the PCIE interface, details are as follows:
the PCIE control unit stores, through the PCIE interface, the first IPMI data into storage space that is in the BMC and that corresponds to the PCIE interface; and
when the BMC receives the first IPMI data, details are as follows:
the BMC obtains the first IPMI data from the storage space.

5. The electronic device according to claim 3, wherein when the BMC sends the second IPMI data to the controller through the PCIE interface, details are as follows:
the BMC stores the second IPMI data into storage space corresponding to the PCIE interface; and
when the PCIE control unit receives, through the PCIE interface, the second IPMI data sent by the BMC, details are as follows:
the PCIE control unit obtains the second IPMI data from the storage space in the BMC through the PCIE interface.

6. The electronic device according to claim 4 or 5, wherein
the processor core is further configured to configure address information of the storage space in a process of initializing the controller, wherein the address information indicates a storage location, in the BMC, of the first IPMI data or the second IPMI data transmitted through the PCIE interface.

7. The electronic device according to claim 1, wherein if the IPMB interface is disposed between the processor and the BMC, the processor further comprises an intelligent management unit IMU;
when the controller sends the first IPMI data to the BMC through the IPMB interface, details are as follows:
the controller sends the first IPMI data to the IMU; and
the IMU sends the first IPMI data to the BMC through the IPMB interface.

8. The electronic device according to claim 7, wherein when the controller receives, through the IPMB interface, the second IPMI data sent by the BMC, details are as follows:
the IMU receives, through the IPMB interface, the second IPMI data sent by the BMC, and sends the second IPMI data to the controller; and
the controller receives the second IPMI data sent by the IMU.

9. The electronic device according to any one of claims 1 to 5, 7, and 8, wherein the controller is a block transfer BT controller or a keyboard controller style KCS controller.

10. The electronic device according to any one of claims 1 to 5, 7, and 8, wherein the processor comprises at least two controllers; and
the at least two controllers comprise a controller configured to transmit IPMI data corresponding to the BIOS system and a controller configured to transmit IPMI data corresponding to the OS system.

11. A processor, wherein the processor comprises a processor core and at least one controller; the processor core is configured to: generate first intelligent platform management interface IPMI data in a running process, and send the first PIMI data to the at least one controller, wherein the first IPMI data represents a status of the processor; and receive second IPMI data sent by the at least one controller, and adjust the status of the processor based on the second IPMI data, wherein the second IPMI data is a control instruction for managing the processor by a baseboard management controller BMC; and
the at least one controller is configured to: after the first IPMI data sent by the processor core is received, send the first IPMI data to the BMC through a peripheral component interconnect express PCIE interface or an intelligent platform management bus IPMB interface disposed between the processor and the BMC; and receive, through the PCIE interface or the IPMB interface, the second IPMI data sent by the BMC, and send the second IPMI data to the processor core.

12. The processor according to claim 11, wherein if the PCIE interface is disposed between the processor and the BMC, the processor further comprises a PCIE control unit;
when the controller sends the first IPMI data to the BMC through the PCIE interface disposed between the processor and the BMC, details are as follows:
the controller sends the first IPMI data to the PCIE control unit; and
the PCIE control unit sends the first IPMI data to the BMC through the PCIE interface.

13. The processor according to claim 12, wherein when the controller receives, through the PCIE interface, the second IPMI data sent by the BMC, details are as follows:
the PCIE control unit receives, through the PCIE interface, the second IPMI data sent by the BMC, and sends the second IPMI data to the controller; and
the controller receives the second IPMI data sent by the PCIE control unit.

14. The processor according to claim 12, wherein when the PCIE control unit sends the first IPMI data to the BMC through the PCIE interface, details are as follows:
the PCIE control unit stores, through the PCIE interface, the first IPMI data into storage space that is in the BMC and that corresponds to the PCIE interface.

15. The processor according to claim 13, wherein when the PCIE control unit receives, through the PCIE interface, the IPMI data sent by the BMC, details are as follows:
the PCIE control unit obtains the second IPMI data from the storage space in the BMC through the PCIE interface.

16. The processor according to claim 14 or 15, wherein
the processor core is further configured to configure address information of the storage space in a process of initializing the controller, wherein the address information indicates a storage location, in the BMC, of the first IPMI data or the second IPMI data transmitted through the PCIE interface.

17. The processor according to claim 11, wherein if the IPMB interface is disposed between the processor and the BMC, the processor further comprises an intelligent management unit IMU; and
when the controller sends the first IPMI data to the BMC through the IPMB interface, details are as follows:
the controller sends the first IPMI data to the IMU; and
the IMU sends the first IPMI data to the BMC through the IPMB interface.

18. The processor according to claim 17, wherein when the controller receives, through the IPMB interface, the second IPMI data sent by the BMC, details are as follows:
the IMU receives, through the IPMB interface, the second IPMI data sent by the BMC, and sends the second IPMI data to the controller; and
the controller receives the second IPMI data sent by the IMU.

19. A data transmission method, wherein the method is applied to at least one controller in a processor, and the method comprises:
receiving, by the controller, first IPMI data sent by a processor core in the processor, and sending the first IPMI data to a BMC through a PCIE interface or an IPMB interface disposed between the processor and the BMC, wherein the first IPMI data represents a status of the processor; and
receiving, by the controller through the PCIE interface or the IPMB interface, second IPMI data sent by the BMC, and sending the second IPMI data to the processor core, wherein the second IPMI data is a control instruction for managing the processor by the BMC.

20. The method according to claim 19, wherein the sending, by the controller, the first IPMI data to a BMC through a PCIE interface disposed between the processor and the BMC comprises:
sending, by the controller, the first IPMI data to a PCIE control unit in the processor, so that the PCIE control unit sends the first IPMI data to the BMC through the PCIE interface.

21. The method according to claim 19 or 20, wherein the receiving, by the controller through the PCIE interface, second IPMI data sent by the BMC comprises:
receiving, by the controller, the second IPMI data sent by the PCIE control unit in the processor, wherein the second IPMI data is obtained by the PCIE control unit through the PCIE interface from storage space that is in the BMC and that corresponds to the PCIE interface.

22. The method according to claim 19, wherein the sending, by the controller, the first IPMI data to a BMC through an IPMB interface disposed between the processor and the BMC comprises:
sending, by the controller, the first IPMI data to an IMU in the processor, so that the IMU sends the first IPMI data to the BMC through the IPMB interface.

23. The method according to claim 19 or 22, wherein the receiving, by the controller through the IPMB interface, second IPMI data sent by the BMC comprises:
receiving, by the controller, the second IPMI data sent by the IMU in the processor, wherein the second IPMI data is sent by the BMC to the IMU through the IPMB interface.

24. A data transmission apparatus, wherein the apparatus comprises:
a first transceiver unit, configured to: receive first IPMI data sent by a processor core in a processor, and send the first IPMI data to a BMC through a PCIE interface or an IPMB interface disposed between the processor and the BMC, wherein the first IPMI data represents a status of the processor; and
a second transceiver unit, configured to: receive, through the PCIE interface or the IPMB interface, second IPMI data sent by the BMC, and send the second IPMI data to the processor core, wherein the second IPMI data is a control instruction for managing the processor by the BMC.

25. A computer-readable storage medium, storing computer-executable instructions, wherein the computer-executable instructions are used for enabling a computer to perform the method according to any one of claims 19 to 23.

26. A computer program product, comprising computer-executable instructions, wherein the computer-executable instructions are used for enabling a computer to perform the method according to any one of claims 19 to 23.
